(19) Europäisches Patentamt
European Patent Office
Office européen des brevets

(11) **EP 4 386 427 A1**

(12) **EUROPEAN PATENT APPLICATION**

(43) Date of publication:
**19.06.2024 Bulletin 2024/25**

(21) Application number: **22214033.7**

(22) Date of filing: **16.12.2022**

(51) International Patent Classification (IPC):
**G01S 7/35** $^{(2006.01)}$    **G01S 13/42** $^{(2006.01)}$
**G01S 13/58** $^{(2006.01)}$    **G01S 13/86** $^{(2006.01)}$
**G01S 13/87** $^{(2006.01)}$

(52) Cooperative Patent Classification (CPC):
**G01S 13/867; G01S 7/352; G01S 13/42;**
**G01S 13/584; G01S 13/87;** G01S 2013/0245

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Imec VZW**
  **3001 Leuven (BE)**

• **Katholieke Universiteit Leuven
  KU Leuven Research & Development
  3000 Leuven (BE)**

(72) Inventors:
• **SAFA, Ali
  1180 Brussel (BE)**
• **VAN LIEMPD, Barend Wilhelmus Marinus
  3220 Holsbeek (BE)**

(74) Representative: **AWA Sweden AB
  Box 5117
  200 71 Malmö (SE)**

(54) **AN RADAR APPARATUS AND A METHOD FOR VISUAL PRESCAN FOR MOVING OBJECTS**

(57) An apparatus (100; 200) for object information acquisition comprises: an object detecting unit (110; 210) configured to monitor a scene to detect a moving object (10) in the scene and determine an angular direction associated with the moving object (10), a radar unit (120; 220) configured to detect a range of the moving object (10) and a velocity of the moving object (10), wherein the radar unit (120; 220) is configured to be controlled based on the detection of the moving object (10) to selectively steer a beam (30) emitted by the radar unit (120; 220) into the angular direction associated with the moving object (10), wherein the radar unit (120; 220) is configured to detect a response from the moving object (10) for determining the range of the moving object (10) and the velocity of the moving object (10).

```
┌─────────────────────┐
│   Monitor a scene   │────── 302
└─────────────────────┘
           │
           ▼
┌─────────────────────┐
│ Detect moving object│
│ and determine angular│───── 304
│ direction associated with│
│   moving object     │
└─────────────────────┘
           │
           ▼
┌─────────────────────┐
│ Control radar unit based│
│ on angular direction to │── 306
│   selectively steer │
│   emitted beam      │
└─────────────────────┘
           │
           ▼
┌─────────────────────┐
│ Detect response from│
│ object to determine range│── 308
│  and velocity of object │
└─────────────────────┘
```

*Fig. 3*

EP 4 386 427 A1

## Description

Technical field

The present description relates to acquisition of information relating to an object. In particular, the present description relates to acquisition of information relating to an object in a scene, such as information relating to a position and/or velocity of the object.

Background

A vision system for monitoring a scene may be configured to provide detection of objects (e.g., objects of interest) within the scene and to determine distance (ranging) and velocity of the object. Thus, the vision system should be configured to provide location of the object in an image plane (sensor plane), a distance between the object and the image plane and a velocity of the object.

Such vision systems may be useful in many applications, such as in Internet of Things (IoT) applications. This implies that the vision system may be incorporated in a compact device with limited power resources, such that the vision system should be implemented with a low power consumption.

The vision system may include using a camera, such as a RGB imaging camera. However, the RGB imaging may not directly provide neither ranging nor velocity information of object. Also, RGB imaging may be sensitive to environmental effects in the scene, such as fog, or variations in illumination, etc. Environmental effects may be avoided using another type of sensor, such as a radar. However, radars usually have a high power consumption such that radars may not be suitable for systems requiring low power consumption.

Thus, there is a need for acquisition of information relating to an object using limited power consumption.

Summary

An objective of the present description is to enable acquisition of information relating to an object using limited power consumption. A particular objective of the present description is to enable detecting objects and determining of range and velocity of the object.

This and other objectives are at least partly met by the invention as defined in the independent claims. Preferred embodiments are set out in the dependent claims.

According to a first aspect, there is provided an apparatus for object information acquisition, said apparatus comprising: an object detecting unit, wherein the object detecting unit is configured to monitor a scene to detect a moving object in the scene and determine an angular direction associated with the moving object, a radar unit configured to detect a range of the moving object and a velocity of the moving object, wherein the radar unit is configured to be controlled based on the detection of the moving object to selectively steer a beam emitted by the radar unit into the angular direction associated with the moving object, wherein the radar unit is configured to detect a response from the moving object for determining the range of the moving object and the velocity of the moving object.

The apparatus is configured to combine an object detecting unit with a radar unit. Thus, the apparatus may be configured to provide detection of moving objects (e.g., objects of interest) using the object detecting unit. Further, the apparatus may be configured to determine a range and a velocity of a moving object using the radar unit. Thanks to the radar unit being controlled based on the detection of the moving object, the radar unit may be selectively used such that power consumption of the radar unit may be limited.

The radar unit may be configured to be activated only when a moving object is detected in the scene by the object detecting unit. Thus, if no moving objects or no moving objects of interest are present in the scene, the radar unit need not be active such that power consumption is limited.

In particular, the radar unit is configured to selectively steer a beam emitted by the radar unit. Thus, the object detecting unit is configured to at least coarsely determine an angular direction associated with the object. The radar unit may be controlled such that a beam is selectively steered into the angular direction. This implies that the radar unit may be controlled at emission to control a region in a scene which is being analyzed by the radar unit.

This implies that power consumption of the radar unit may be substantially reduced compared to a radar that images an entire scene.

It should be realized that the apparatus may comprise a plurality of radar units, which may each be configured to be controlled based on detection of the moving object to selectively steer a beam into the angular direction associated with the moving object and may each be configured to detect a response from the moving object.

The apparatus may comprise a plurality of radar units such that a radar unit may be selected in dependence of the angular direction associated with the moving object. Thus, in dependence of the angular direction, a radar unit among the plurality of radar units, which may be statically or temporarily oriented towards emitting the beam in the desired direction, may be selected to output the beam into the angular direction associated with the moving object. Hence, the radar unit being controlled based on detection of the moving object may imply that a particular radar unit among the plurality of radar units is activated such that the beam is selectively steered, by selection of a particular radar unit among the plurality of radar units to be emitted by the radar unit into the desired angular direction.

The apparatus may also use the plurality of radar units such that beams may be emitted simultaneously towards different moving objects detected by the object detecting unit.

The object detecting unit may use any sensor suitable for identifying moving objects in the scene. The object detecting unit may advantageously comprise a sensor that provides low power consumption for identifying moving objects. Thus, the object detection provided by the object detecting unit may be complemented by the radar unit that is configured to determine the range and velocity of the moving object in a power efficient manner.

The object detecting unit being configured to determine an angular direction associated with the moving object implies that the object detecting unit is configured to obtain information to control a direction of beam emission by the radar unit. In this respect, the apparatus may define a default direction, such as a normal to a sensor plane of the object detecting unit. The moving object may further be associated with a direction in relation to the sensor plane corresponding to a straight line between the moving object and the sensor plane. Thus, an angle may be defined between the default direction and the straight line between the moving object and the sensor plane so as to define the angular direction. It should be realized that the angular direction may have two components or may define a solid angle. It should further be realized that the default direction may be defined in various manners such as in relation to the object detecting unit or in relation to the radar unit.

The apparatus may provide a well-known relationship between the object detecting unit and the radar unit such that the angular direction determined by the object detecting unit may be directly converted to a direction to be used in relation to the radar unit. It should be realized that the radar unit may be arranged close to the object detecting unit but may alternatively be arranged in a different location with a known relation between the object detecting unit and the radar unit.

The range of a moving object may be a distance between the apparatus and the moving object. The distance may be a measure of a distance along a line of sight between the moving object and the apparatus. The distance may alternatively be a distance along an axis defining a direction through the scene, such as a distance along a horizontal axis.

The range of the moving object may be a distance between a particular part of the apparatus and the moving object, such as a distance between the radar unit and the moving object.

As an alternative, the range of a moving object may be a distance between a reference point and the moving object. Thus, a reference point may be defined in the scene. For instance, the reference point may be defined in the scene as a position close to the apparatus.

The radar unit may be configured to be controlled by the object detecting unit, such that the object detecting unit may provide input directly to the radar unit for controlling the radar unit. Alternatively, the apparatus may comprise a separate controller, which may receive input from the object detecting unit and which may be configured to provide control signals to the radar unit for controlling the radar unit.

The radar unit may be configured in many different ways in order to selectively emit a beam into the angular direction associated with the moving object. For instance, the radar unit may comprise a movable antenna, which may be moved, e.g., rotated, so as to emit the beam in the desired angular direction. Alternatively, the radar unit may comprise a plurality of antennas, which may be controlled such that a beam formed by a combined emission from the plurality of antennas is controlled to steer the beam into the desired angular direction.

A response from the moving object may formed by a reflection of the emitted beam. The reflection may be directed back towards the apparatus such that the response may be detected.

According to an embodiment, the radar unit comprises a plurality of antennas, wherein the radar unit is configured to control a phase shift between signals emitted by different antennas of the plurality of antennas for steering the beam into the angular direction associated with the moving object.

This implies that the beam emitted by the radar unit may be easily controlled and there is no need for moving parts of the radar unit in order to control the direction of the beam being emitted.

The radar unit may thus comprise a plurality of antennas forming a phased array, which may be electronically controlled using control of phase shifts.

According to an embodiment, the radar unit is configured to detect the response from the moving object by any number of receive antennas.

Thanks to the radar unit being controlled to selectively steer the emitted beam into the angular direction associated with the moving object, the radar unit may output the beam in only one direction. This implies that there is no need for the radar unit at reception of the response to determine a direction from which the response is received. Thus, it may be sufficient for the radar unit to use a single receive antenna. However, it should be realized that the radar unit may be configured to detect the response from the moving object by any number of receive antennas.

Use of a single receive antenna may ensure that power consumption for receiving a response from the moving object is limited such that the range of the object and the velocity of the object may be determined in a power efficient manner.

It should be realized that transmit antennas of the radar unit and receive antennas of the radar unit need not necessarily be arranged in the same location.

According to an embodiment, the object detecting unit comprises a camera for imaging of the scene.

A camera may provide an efficient manner of monitoring the scene. The camera may be combined with an image processing unit for automatically processing images detected by the camera so as to enable automatic detection of the moving object in the scene.

According to an embodiment, the camera is an event-based camera configured to output brightness changes in the scene.

This implies that the scene may be imaged without using a shutter to acquire images (frames) for output by the camera. Rather, the camera may be configured to report changes in brightness as such changes occur, wherein the changes may be reported individually by each pixel of the camera.

Thus, the camera may comprise a plurality of photo-sensitive elements, each forming a pixel of the camera. The camera may further be configured to output indications of changes in brightness individually by the photo-sensitive elements. The photo-sensitive elements may be configured to provide output only when a change in brightness occurs.

This implies that the event-based camera may consume very low power, since output needs to be provided only when changes in brightness occur and only for the photo-sensitive elements affected.

Any change in brightness may be considered to correspond to a potential moving object. The object detecting unit may further comprise a processing unit configured to receive input relating to changes in brightness from the event-based camera and further configured to process the input to detect whether there is a moving object in the scene.

The object detecting unit may be configured to detect moving objects of interest and differentiate detection of moving objects of interest from moving objects that are not of interest. Thus, the processing unit may for instance be configured to detect human beings moving in the scene and detect other objects that are not of interest, such as cats or other animals, moving in the scene. The object detecting unit may only output an indication that a moving object is detected when a moving object of interest is detected. Thus, the radar unit may be configured to be activated to detect the range and the velocity of the moving object only when the object detecting unit identifies a moving object of interest moving in the scene. Using an event-based camera, detection of moving objects of interest may be provided in a very power efficient manner, especially if no moving objects are present at prolonged periods of time.

According to an embodiment, the object detecting unit is configured to determine the angular direction associated with the moving object based on a location of the moving object in an image plane of the camera and based on a focal length of the camera.

The camera may indicate photo-sensitive elements or pixels associated with a moving object. The photo-sensitive elements may together with the focal length of the camera and a size of the moving object (e.g., a width of the moving object) in the image plane define the angular direction associated with the moving object. Thus, the angular direction may be determined by the object detecting unit and may be provided to the radar unit for controlling selective steering of the beam emitted by the radar unit.

The camera may be set up to be statically used for monitoring the scene such that the focal length of the camera is always constant. This implies that the photo-sensitive elements may be directly associated with the angular direction such that the photo-sensitive elements in which the moving object is detected may be directly converted to the angular direction.

Thus, the angular direction associated with the moving object may be easily determined by the object detecting unit allowing the object detecting unit to provide input for controlling the beam emitted by the radar unit.

According to an embodiment, the radar unit is configured to be controlled based on information acquired by the camera for imaging of the scene such that radar settings of the radar unit are controlled for reduction of resource usage of the radar unit.

Thus, in addition to controlling the angular direction for the beam emitted by the radar unit, the information acquired by the camera may be used to further control settings of the radar unit. Such settings may be used for reducing resource usage of the radar unit such that power consumption of the radar unit may be limited.

As further discussed below, the radar settings may involve controlling the radar unit to investigate the range of the moving object and the velocity of the moving object only within limited ranges of possible values, such that resource usage and, hence, power consumption, may be reduced.

According to an embodiment, the object detecting unit is further configured to determine a coarse estimate of the range of the moving object based on a size of the moving object in the image plane of the camera.

The size of the moving object in the image plane of the camera may provide an indication of a range of the moving object. In particular, the size of the moving object in the image plane and a known actual size of the moving object may be used for providing the indication of the range of the moving object. For instance, if the object of interest is a human being, the actual size of the moving object may be roughly known.

The object detecting unit may thus be used for providing a coarse estimate of the range of the moving object, such that the coarse estimate may be improved by further detection by the radar unit.

According to an embodiment, the radar unit is configured to be controlled based on the coarse estimate of the range of the moving object to control a maximum range being detected by the radar unit.

This implies that the coarse estimate may be used for controlling the radar unit. By setting a maximum range, the radar unit need only determine ranges of the object smaller than the maximum range. This implies that the radar unit may be set such that ranges beyond the maximum range need not be considered, whereby resource usage may be reduced.

According to an embodiment, an ADC sampling frequency of the radar unit is controlled for controlling the maximum range.

The analog-to-digital converter (ADC) sampling frequency of the radar unit may scale linearly with the maximum range of the radar unit. However, the higher the ADC sampling frequency, the higher the power consumption of the radar unit is.

Thus, the radar unit may be controlled by setting the ADC sampling frequency based on information acquired by the camera such that resource usage and power consumption of the radar unit may be reduced.

According to an embodiment, the object detecting unit is configured to determine a coarse estimate of the velocity of the moving object.

Information acquired by the camera may be used for providing the coarse estimate of the velocity. For instance, using optical flow algorithms a velocity of the object may be estimated from the information acquired by the camera.

The information acquired by the camera may not give an actual value of velocity but may at least provide a magnitude of an estimate that scales with the actual value of the velocity. The object detecting unit may thus be used for providing a coarse estimate of the velocity of the moving object, such that the coarse estimate may be improved by further detection by the radar unit.

According to an embodiment, the radar unit is configured to be controlled based on the coarse estimate of the velocity of the moving object to control a maximum velocity being detected by the radar unit.

This implies that the coarse estimate may be used for controlling the radar unit. By setting a maximum velocity, the radar unit need only determine velocities of the object smaller than the maximum velocity. This implies that the radar unit may be set such that ranges beyond the maximum velocity need not be considered, whereby resource usage may be reduced.

According to an embodiment, a duty cycle of radar chirps is controlled for controlling the maximum velocity.

The duty cycle of radar chirps defines a time duration between consecutive radar chirps, i.e., a time duration during which the radar is silent between radar chirps.

The duty cycle of radar chirps of the radar unit may scale with the maximum velocity to be determined by the radar unit. However, the higher the duty cycle, the higher the power consumption of the radar unit is.

Thus, the radar unit may be controlled by setting the duty cycle of radar chirps based on information acquired by the camera such that resource usage and power consumption of the radar unit may be reduced.

According to an embodiment, the apparatus further comprises a fusion unit configured to fuse information from the object detecting unit and the radar unit for forming combined information of location and velocity of the moving object.

Thus, the information acquired by the object detecting unit and the radar unit may be combined to enable the apparatus to output information relating to location (in three dimensions) and velocity of the moving object.

According to a second aspect, there is provided a method for object information acquisition, said method comprising: monitoring a scene using an object detecting unit; detecting a moving object in the scene and determining the angular direction associated with the moving object; controlling a radar unit based on the angular direction associated with the moving object to selectively steer a beam emitted by the radar unit into the angular direction; and detecting a response from the moving object for determining a range of the moving object and a velocity of the moving object.

Effects and features of this second aspect are largely analogous to those described above in connection with the first aspect. Embodiments mentioned in relation to the second aspect are largely compatible with the first aspect.

Thanks to using the object detecting unit for monitoring the scene for identifying objects and the radar unit for selectively steering the emitted beam towards the detected moving object, locations and velocities of moving objects may be determined in a power efficient manner.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a schematic view of an apparatus according to an embodiment.
Fig. 2 is a schematic view of the apparatus according to another embodiment.
Fig. 3 is a flow chart of a method according to an embodiment.

Detailed description

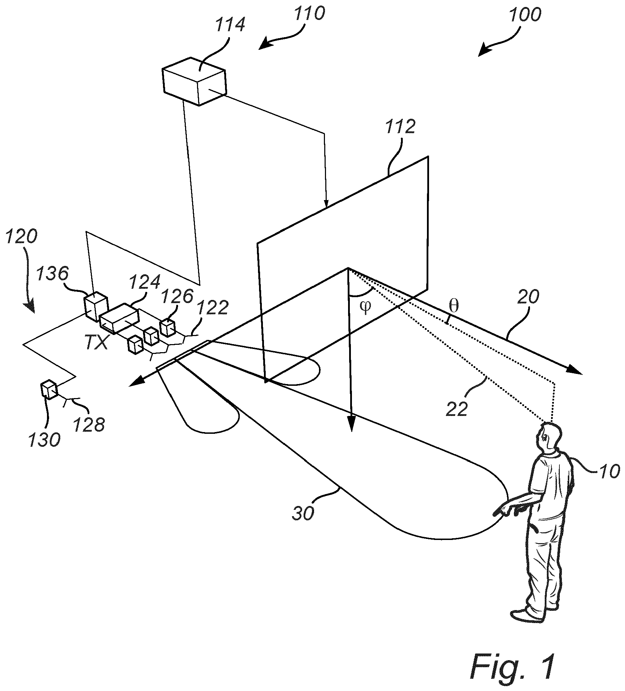

Referring now to Fig. 1, an apparatus 100 for object information acquisition will be described. The apparatus 100 may be configured to monitor a scene. The apparatus 100 may be configured to monitor an indoor or outdoor scene in which it is desired to detect moving objects. For instance, the apparatus 100 may be configured to monitor human beings moving through a scene. The apparatus 100 may be used in various applications such as merely for collecting information relating the moving objects that may be used for analysis purposes or for controlling measures to be taken in relation to moving objects, such as sending alerts in a security application. It should be realized that the moving objects may be any type of objects of interest and need not necessarily be human beings but may instead be, e.g., vehicles. It should also be realized that the apparatus 100 may not necessarily be stationary mounted to monitor a stationary scene. Rather, the apparatus 100 may be configured to be mounted in a moving environment, such as being mounted in a vehicle for monitoring an environment in relation to the moving vehicle.

The apparatus 100 may be implemented as a compact device that may be installed in a relevant location for monitoring a scene. The apparatus 100 may further be configured to communicate acquired information to a remote unit for processing of the information remotely. The apparatus 100 may thus be implemented as an Internet of Things (IoT) device configured to communicate with remote units using Internet. The apparatus 100 may typically be installed to be used over a long period of time and may be configured to be battery-powered. In order to maintain a long lifetime of the apparatus 100 and to avoid need of maintenance (re-charging of battery), it is of high importance to limit power consumption of the apparatus 100.

The apparatus 100 comprises an object detecting unit 110. The object detecting unit 110 is configured to monitor the scene to detect a moving object 10 in the scene. The object detecting unit 110 may be configured to continuously monitor the scene in order to identify moving objects 10 in the scene when the moving objects appear. However, it should be realized that the object detecting unit 110 need not necessarily perform continuous monitoring. Rather, in some applications, the object detecting unit 110 may be intermittently activated, e.g., at regular time intervals or being activated based on a trigger from an external device or from another (low-power) sensor of the apparatus 100.

The object detecting unit 110 may be configured to detect moving objects 10 using a relatively low power consumption. The object detecting unit 110 may comprise a sensor 112 configured to acquire sensed information and a processing unit 114 for processing the sensed information. The sensor 112 may comprise a camera as will be described in detail below. However, it should be realized that the sensor 112 may be another type of sensor capable of detecting moving objects 10 in the scene and determining an angular direction associated with the moving object 10.

The sensor 112 of the object detecting unit 110 could for instance be a low power radar, which may be configured to detect moving objects in the scene with low resolution. Using low resolution, power consumption of the radar may be limited. The low power radar may thus be configured with a plurality of receiving antennas for enabling beamforming at reception of a response from a moving object, wherein the beamforming enables coarsely determining an angular direction associated with the moving object 10.

The processing unit 114 of the object detecting unit 110 may be configured to process sensed information from the sensor 112 in order to identify moving objects 10 in the scene and determining the angular direction associated with the moving object 10.

The object detecting unit 110 may comprise a processing unit 114 dedicated to the functionality of the object detecting unit 110. However, the processing unit 114 of the object detecting unit 110 may alternatively be implemented within a processor shared with other units of the apparatus 100.

The processing unit 114 may be implemented in a general-purpose processing unit, such as a central processing unit (CPU), which may execute instructions of one or more computer programs in order to implement functionality of the processing unit 114. However, the processing unit 114 may alternatively be implemented as firmware arranged e.g., in an embedded system, or as a specifically designed processing unit, such as an Application-Specific Integrated Circuit (ASIC) or a Field-Programmable Gate Array (FPGA).

The processing unit 114 of the object detecting unit 110 may be implemented in a common processor also providing other functionality of the apparatus 100 so that (parts of) different units may for instance be defined by different threads within the common processor.

The object detecting unit 110 being configured to determine an angular direction associated with the moving object 10 implies that the object detecting unit 110 is configured to obtain information to control a direction of beam emission by a radar unit 120. In this respect, the apparatus 100 may define a default direction 20, such as a normal to a sensor plane of the object detecting unit 110. The moving object 10 may further be associated with a direction 22 in relation to the sensor plane corresponding to a straight line between the moving object 10 and the sensor plane. Thus, an angle may be defined between the default direction 20 and the straight line between the moving object 10 and the sensor plane so as to define the angular direction. It should be realized that the angular direction may have two components, indicated as an azimuthal angle $\theta$ and a polar angle $\varphi$ in Fig. 1. It should further be realized that the default direction 20 may be defined in various manners such as in relation to the object detecting unit 110 or in relation to the radar unit 120. The apparatus 100 may provide a well-known relationship between the object detecting unit 110 and the radar unit 120 such that the angular direction determined by the object detecting unit 110 may be directly converted to a direction to be used in relation to the radar unit 120.

The apparatus 100 further comprises a radar unit 120. The radar unit 120 may be triggered by the object detecting unit 110 such that the radar unit 120 is activated only when a moving object 10 is detected by the object detecting unit 120. This implies that power consumption of the radar unit 120 may be limited to instances when a moving object 10 is present in the scene.

The radar unit 120 may further be configured to receive control parameters which may be directly used by the radar unit 120 for controlling functionality of the radar unit 120. Alternatively, the radar unit 120 may be configured to receive the angular direction associated with the moving object 10 such that the radar unit 120 may be configured to control a beam emitted by the radar unit 120 based on the angular direction.

The radar unit 120 may comprise a plurality of antennas 122, such as at least two antennas 122, which may be controlled for controlling a direction of a beam 30 emitted by the radar unit 120. The plurality of antennas 122 may be connected to a single transmitter 124 generating a radio frequency signal. Each antenna 122 may be associated with an individually controllable phase shifter 126 for controlling a phase relation between signals transmitted by the respective antennas 122 such that an angular direction of the beam 30 is controlled.

It should be realized that the radar unit 120 may be configured to control the angular direction of the beam 30 in other manners, such as by physically moving one or more antennas to face the desired angular direction.

The radar unit 120 is thus configured to selectively steer the emitted beam 30 into the desired angular direction towards a location in which the moving object 10 is present. The radar unit 120 is further configured to detect a response from the moving object 10. The radar unit 120 may be configured to detect the response using a single receive antenna 128 since the receive antenna 128 need not be able to perform beamforming at reception for determining a direction from which the response is received.

The radar unit 120 may further comprise a processing unit 130 which is configured to process sensed information from the receive antenna 128 in order to determine a range of the moving object 10 (i.e., a distance along the angular direction between the radar unit 120 and the moving object 10) and a velocity of the moving object 10.

The processing unit 130 of the radar unit 120 may for instance be configured to execute algorithms based on Fast Fourier Transform (FFT) for determining range and velocity based on the sensed information.

The radar unit 120 may comprise a processing unit 130 dedicated to the functionality of processing information sensed by the radar unit 120. However, the processing unit 130 of the radar unit 120 may alternatively be implemented within a processor shared with other units of the apparatus 100, such as the object detecting unit 110.

The radar unit 120 may further comprise a controller 136 for controlling beam emission and reception by the radar unit 120, wherein the controller 136 may be separate from the processing unit 130 for processing information sensed by the radar unit 120. Alternatively, the controller 136 and the processing unit 130 may be implemented in a common processor.

The processing unit 130 may be implemented in a general-purpose processing unit, such as a central processing unit (CPU), which may execute instructions of one or more computer programs in order to implement functionality of the processing unit 130. However, the processing unit 130 may alternatively be implemented as firmware arranged e.g., in an embedded system, or as a specifically designed processing unit, such as an Application-Specific Integrated Circuit (ASIC) or a Field-Programmable Gate Array (FPGA).

The processing unit 130 of the radar unit 120 may be implemented in a common processor also providing other functionality of the apparatus 100 so that (parts of) different units may for instance be defined by different threads within the common processor.

Thanks to the radar unit 120 being configured to selectively steer the beam 30 such that it is merely emitted towards the moving object 10, power consumption of the radar unit 120 may be substantially reduced compared to a radar that would illuminate in all physical directions for determining range and velocity of moving objects 10.

The object detecting unit 110 may be configured to communicate directly with the radar unit 120 for providing control of the radar unit 120. Alternatively, the object detecting unit 110 may be configured to output information to a control unit of the apparatus 100 providing an overall control of functionality of the apparatus 100. The control unit may in turn be configured to provide control signals to the radar unit 120 for controlling the radar unit 120 based on the information sensed by the object detecting unit 110.

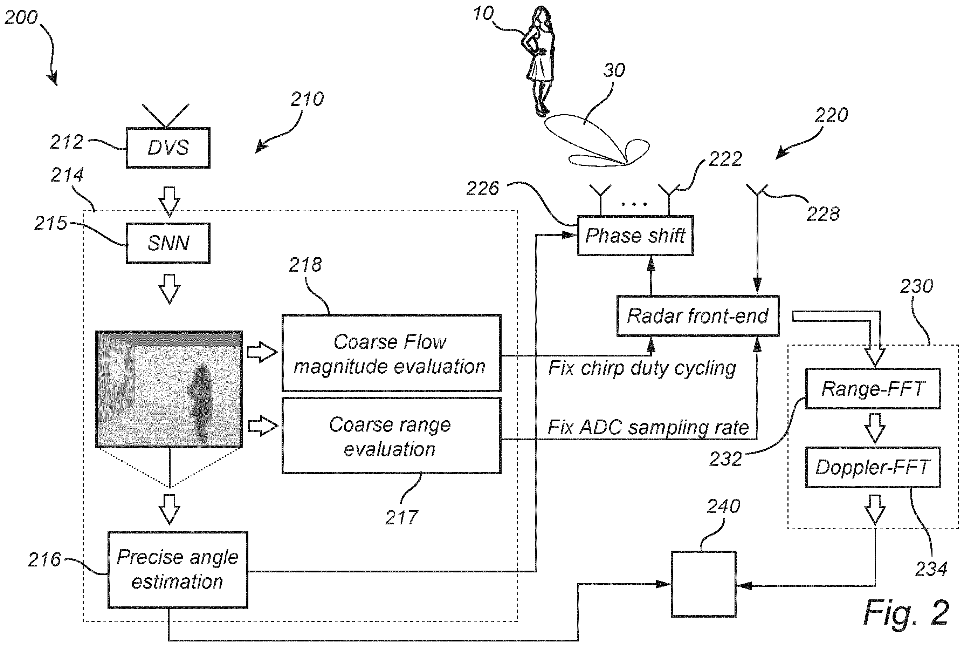

Referring now to Fig. 2, a detailed description of an embodiment of the apparatus 200 will be provided.

The object detecting unit 210 of the apparatus 200 comprises a camera 212 for imaging of the scene. The object detecting unit 210 may be implemented using any camera 212 together with the processing unit 214 being configured to perform image processing of images acquired by the camera 212 for detecting moving objects 10 and determining the angular direction associated with the moving object 10.

As illustrated in Fig. 2, the camera 212 may be an event-based camera configured to detect changes in brightness in the scene. The camera 212 may be configured to report changes in brightness as such changes occur, wherein the changes may be reported individually by each pixel of the camera.

Thus, the camera 212 may comprise a plurality of photo-sensitive elements, each forming a pixel of the camera 212. The camera 212 may further be configured to output indications of changes in brightness individually by the photo-sensitive elements. The photo-sensitive elements may be configured to provide output only when a change in brightness occurs.

This implies that the event-based camera 212 may consume very low power, since output needs to be provided only when changes in brightness occur and only for the photo-sensitive elements affected.

The event-based camera 212 may have a high dynamic range such that the event-based camera 212 may be very robust to general brightness changes in the scene, such as changes to ambient light.

Any change in brightness may be considered to correspond to a potential moving object. The processing unit 214 of the object detecting unit 210 may be configured to receive input relating to changes in brightness from the event-based camera 212 and further configured to process the input to detect whether there is a moving object 10 in the scene and, in particular, if there is a moving object 10 of interest in the scene.

The processing unit 214 may be configured to process information acquired by the event-based camera 212 using a Spiking Neural Network (SNN) 215, which is an ultra-energy-efficient manner of processing the information acquired by the event-based camera 212.

The processing unit 214 may use the SNN 215 to segment the scene in order to detect moving objects of interest. The processing unit 214 may then further be configured to determine the angular direction associated with the object 10 using an angle estimation algorithm 216. The processing unit 214 may thus use detection of the object in a location in an image plane of the event-based camera 212 and a known focal length of the camera 212 in addition to a size of the moving object 10 in the image plane to determine the angular direction associated with the moving object 10.

The object detecting unit 210 may be able to provide an accurate estimate of the angular direction based on the information sensed by the event-based camera 212. Thus, a high-resolution estimate of the angular direction may be acquired by the object detecting unit 210.

The object detecting unit 210 may be configured to output the high resolution estimate of the angular direction to the radar unit 220. The radar unit 220 may be configured to control the phase shifter 226 to tune the phase shifts between plurality of antennas 222 in order to steer the beam 30 emitted by the radar unit 220 towards the moving object 10.

The radar unit 220 may thus be used for determining range and velocity of the moving object 10. The radar unit 220 may comprise one or more receive antennas 228, such as a single receive antenna 228, for detecting a response from the moving object 10. The information sensed by the receive antenna 228 may be processed for determining the range and velocity of the moving object 10.

In addition to controlling steering of the beam 30 emitted by the radar unit 220, information acquired by the object detecting unit 210, such as information acquired by the camera 212, may further be used for controlling the radar unit 220 so as to limit power consumption of the radar unit 220 and/or limit usage of resources of the radar unit 220. Examples of this will be described in further detail below.

The radar unit 220 may be a frequency modulated continuous wave (FMCW) radar. In the FMCW radar targeting short ranges to the moving objects 10, such as ranges in order of tens of meters, hundreds of meters or at least shorter than 1 km, there may be a large overlap between a chirp of the transmitted signal (emitted beam 30) and the received signal (response from the moving object 10). The maximum range that may be determined by the radar unit 220 may then be related to an intermediate frequency bandwidth and hence also be related to a sampling frequency of an analog-to-digital converter (ADC) receiving the response sensed by the receive antenna 228.

However, the power consumption of the radar unit 220 is related to the ADC sampling frequency such that a higher ADC sampling frequency corresponds to a higher power consumption. Although the apparatus 100 may be configured to monitor a scene that may involve relatively large ranges to moving objects 10, the object detecting unit 210 may be configured to provide a coarse estimate of the range of the moving object 10. This may be used to control the radar unit 220 such that the maximum range to be detected by the radar unit 220 for determining the range of a particular moving object 10 may be controlled based on the coarse estimate by the object detecting unit 210 such that power consumption of the radar unit 220 may be limited. In particular, the object detecting unit 210 may be configured to provide a control parameter as input to the radar unit 220, such as to a radar front-end, for setting the ADC sampling frequency.

The processing unit 214 of the object detecting unit 210 may be configured to determine the coarse estimate of the range of the moving object 10 based on a size of the moving object in the image plane of the camera 212. The processing unit 214 may thus use a coarse range evaluation algorithm 217 which may be configured to translate a height and width of a detection of the moving object 10 in the information acquired by the event-based camera 212 into a coarse estimate of the range of the moving object 10.

Simple trigonometry gives that the larger a detected object 10 appears on the image plane, the closer the detected object 10 is to the camera 212. Thus, the ADC sampling frequency may be scaled based on a size ("largeness") of the detected moving object 10 in information acquired by the camera 212. For instance, the ADC sampling frequency may be set through a simple inversely proportional relationship between the ADC sampling frequency, $F_{ADCS}$, and size (area) of the detected moving object 10 in the image plane using a multiplicative constant $\alpha$, such that $F_{ADCS} = \alpha / area$. The constant $\alpha$ may be determined based on calibration of the apparatus 100.

The radar unit 220 may be configured to output chirp pulses. A repetition frequency of the chirp pulses (or time period T between chirp pulses) may impact a maximum velocity of the moving object that may be determined by the radar unit 220. A frequency shift due to Doppler effect may be given by $\dfrac{2\dot{v}f}{c}$, where $v$ is the velocity of the moving object 10, f is a center frequency of the radar chirp and c is speed of light. In order to enable unambiguous determination of the velocity of the moving object 10, the frequency shift should not be larger than $\dfrac{2}{T}$. Thus, it may be seen that a smaller time period T (or in other words a larger repetition frequency of the chirp pulses) enables determination of a larger maximum velocity of the moving object 10.

The repetition frequency of the chirp pulses is also related to the duty cycle of the radar chirps, i.e., a relation between active time when chirp pulses are output and a silent time between consecutive radar chirps). The duty cycle of the radar chirps is also related to power consumption of the radar unit 220 such that a higher duty cycle requires higher power consumption. The radar unit 220 may thus be controlled to control the duty cycle of the radar chirps for controlling the power consumption by the radar unit 220 while setting a maximum velocity of the moving object 10 to be determined by the radar unit 220.

Thus, the duty cycle of radar chirps may be used as a control parameter of the radar unit 220 such that the maximum velocity to be detected by the radar unit 220 for determining the velocity of a particular moving object 10 may be controlled based on a coarse estimate by the object detecting unit 210. In this way, power consumption of the radar unit 220 may be limited. In particular, the object detecting unit 210 may be configured to provide a control parameter as input to the radar unit 220, such as to a radar front-end, for setting the duty cycle of the radar chirps.

The object detecting unit 210 may be configured to determine a coarse estimate of the velocity of the moving object 10 based on information acquired by the camera 212. Thus, the duty cycle of the radar chirps may be scaled according to information (or clues) that may be obtained from the information acquired by the camera 212.

The processing unit 214 may use a coarse flow magnitude evaluation algorithm 218 for providing a coarse estimate of the velocity of the moving object 10. The coarse flow magnitude evaluation algorithm 218 may be configured to provide a relation between objects moving with different velocities such that it is possible to get a coarse estimate of how fast the object 10 is moving. The coarse flow magnitude evaluation algorithm 218 may use-known optical flow algorithms, such as Lucas-Kanade method, or feature tracking algorithms, such as Kanade-Lucas-Tomasi feature tracker, in order to determine the coarse estimate of velocity.

The velocity information determined by the coarse flow magnitude evaluation algorithm 218 may not be provided directly in real world quantities (such as m/s) but may be related to a velocity within the image plane. However, a magnitude of the coarse estimate may scale with the actual velocity of the objects. The coarse estimate may be used for increasing or decreasing the duty cycle of radar chirps in an adaptive way. For instance, the duty cycle may be set by a relation: *duty_cycle = $\beta$ \* estimate,* where $\beta$ may be determined for instance based on calibration of the apparatus 100. The lower the coarse estimate is, the lower the duty cycle may be set, such that power consumption may be reduced.

The radar unit 220 may further be configured to process the sensed response from the moving object 10 by the processing unit 230 of the radar unit 220. Thus, the processing unit 230 may for instance use FFT algorithms, such as a range FFT algorithm 232 for determining a range of the moving object 10 and a Doppler FFT algorithm 234 for determining a velocity of the moving object 10.

The apparatus 200 may further comprise a fusion unit 240. The fusion unit 240 may be configured to receive the angular direction associated with the object 10 as determined by the object detecting unit 210 and the range and velocity of the moving object 10 as determined by the radar unit 220. The fusion unit 240 may thus utilize the information to form combined information of a location in three dimensions of the moving object 10 within the scene and a velocity of the moving object 10.

The fusion unit 240 may be implemented in a general-purpose processing unit, such as a central processing unit (CPU), which may execute instructions of one or more computer programs in order to implement functionality of the fusion unit 240. However, the fusion unit 240 may alternatively be implemented as firmware arranged e.g., in an embedded system, or as a specifically designed processing unit, such as an Application-Specific Integrated Circuit (ASIC) or a Field-Programmable Gate Array (FPGA).

The fusion unit 240 may be implemented in a common processor also providing other functionality of the apparatus 100 so that (parts of) different units may for instance be defined by different threads within the common processor.

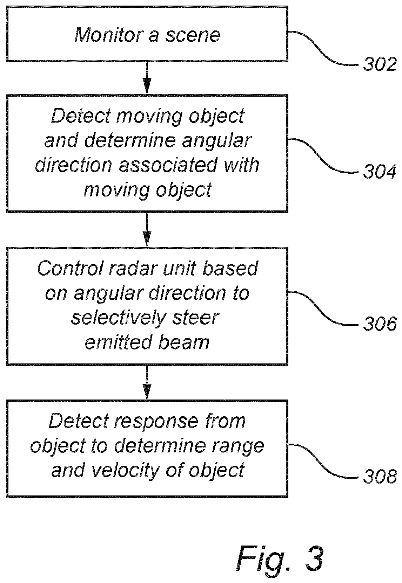

Referring now to Fig. 3, a method for acquisition of object information will be described.

The method comprises monitoring 302 a scene using an object detecting unit.

The method further comprises detecting 304 a moving object in the scene and determining the angular direction associated with the moving object. The object detecting unit may for instance use the event-based camera and the SNN to process the acquired information from the camera to form image information of the scene. The object detecting unit may further determine an angular direction of the moving object using the image information and a focal length of the camera.

The method may further comprise determining a coarse estimate of the range of the object and a coarse estimate of the velocity of the object by the object detecting unit.

The method further comprises controlling 306 a radar unit based on the angular direction associated with the moving object to selectively steer a beam emitted by the radar unit into the angular direction.

The angular direction associated with the moving object may be combined with the coarse estimate of the range and the coarse estimate of the velocity to generate control signals for the radar unit, controlling beamforming at transmission of the beam from the radar unit.

The radar unit may be turned on only when necessary, i.e., when an object or event of interest is detected by the object detecting unit. Radar parameters may be set based on the coarse estimates received from the object detecting unit so as to save power consumption by the radar unit.

The method further comprises detecting 308 a response from the moving object for determining a range of the moving object and a velocity of the moving object. Thus, the radar unit may be used for determining ADC data based on a response sensed by the receive antenna and the range and velocity of the moving object may be determined based on processing of the ADC data.

The method may then return to step 304 to perform detection of a plurality of moving objects in the scene and determining the range and velocity of the plurality of moving objects in the scene.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. An apparatus (100; 200) for object information acquisition, said apparatus (100; 200) comprising:

    an object detecting unit (110; 210), wherein the object detecting unit (110; 210) is configured to monitor a scene to detect a moving object (10) in the scene and determine an angular direction associated with the moving object (10), a radar unit (120; 220) configured to detect a range of the moving object (10) and a velocity of the moving object (10), wherein the radar unit (120; 220) is configured to be controlled based on the detection of the moving object (10) to selectively steer a beam (30) emitted by the radar unit (120; 220) into the angular direction associated with the moving object (10), wherein the radar unit (120; 220) is configured to detect a response from the moving object (10) for determining the range of the moving object (10) and the velocity of the moving object (10).

2. The apparatus according to claim 1, wherein the radar unit (120; 220) comprises a plurality of antennas (122; 222), wherein the radar unit (120; 220) is configured to control a phase shift between signals emitted by different antennas of the plurality of antennas (122; 222) for steering the beam (30) into the angular direction associated with the moving object (10).

3. The apparatus according to claim 2, wherein the radar unit (120; 220) is configured to detect the response from the moving object (10) by any number of receive antennas (128; 228).

4. The apparatus according to any one of the preceding claims, wherein the object detecting unit (210) comprises a camera (212) for imaging of the scene.

5. The apparatus according to claim 4, wherein the camera (212) is an event-based camera configured to output brightness changes in the scene.

6. The apparatus according to claim 4 or 5, wherein the object detecting unit (210) is configured to determine the angular direction associated with the moving object (10) based on a location of the moving object (10) in an image plane of the camera (212) and based on a focal length of the camera (212).

7. The apparatus according to any one of claims 4-6, wherein the radar unit (220) is configured to be controlled based on information acquired by the camera (212) for imaging of the scene such that radar settings of the radar unit (220) are controlled for reduction of resource usage of the radar unit (220).

8. The apparatus according to any one of claims 4-7, wherein the object detecting unit (210) is further configured to determine a coarse estimate of the range of the moving object (10) based on a size of the moving object (10) in the image plane of the camera (212).

9. The apparatus according to claim 8, wherein the radar unit (220) is configured to be controlled based on the coarse estimate of the range of the moving object (10) to control a maximum range being detected by the radar unit (220).

10. The apparatus according to claim 9, wherein an ADC sampling frequency of the radar unit (220) is controlled for controlling the maximum range.

11. The apparatus according to any one of claims 4-10, wherein the object detecting unit (210) is configured to determine a coarse estimate of the velocity of the moving object (10).

12. The apparatus according to claim 11, wherein the radar unit (220) is configured to be controlled based on the coarse estimate of the velocity of the moving object (10) to control a maximum velocity being detected by the radar unit (220).

13. The apparatus according to claim 12, wherein a duty cycle of radar chirps is controlled for controlling the maximum velocity.

14. The apparatus according to any one of the preceding claims, further comprising a fusion unit (240) configured to fuse information from the object detecting unit (210) and the radar unit (220) for forming combined information of location and velocity of the moving object (10).

15. A method for object information acquisition, said method comprising:

monitoring (302) a scene using an object detecting unit;
detecting (304) a moving object in the scene and determining the angular direction associated with the moving object;
controlling (306) a radar unit based on the angular direction associated with the moving object to selectively steer a beam emitted by the radar unit into the angular direction; and
detecting (308) a response from the moving object for determining a range of the moving object and a velocity of the moving object.

Fig. 1

*Fig. 2*

Monitor a scene — 302

Detect moving object and determine angular direction associated with moving object — 304

Control radar unit based on angular direction to selectively steer emitted beam — 306

Detect response from object to determine range and velocity of object — 308

*Fig. 3*

Europäisches
Patentamt

European
Patent Office

Office européen
des brevets

# EUROPEAN SEARCH REPORT

Application Number

EP 22 21 4033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/153016 A1 (METAWAVE CORP [US]) 8 August 2019 (2019-08-08) * equation 2,4,7-9; paragraphs [0020], [0031], [0036], [0038], [0039], [0042], [0045]; figure 4 * | 1-14 | INV. G01S7/35 G01S13/42 G01S13/58 G01S13/86 G01S13/87 |
| X | US 2016/003938 A1 (GAZIT RAN Y [IL] ET AL) 7 January 2016 (2016-01-07) * paragraphs [0027], [0037], [0048], [0050], [0052], [0059]; figures 5A-B,6, 7, 8 * | 1 | |
| X | US 2022/308204 A1 (ZAIDI ABDULLAH AHSAN [US]) 29 September 2022 (2022-09-29) * paragraphs [0013], [0018], [0019], [0029], [0053]; figures 7-8 * | 1 | |
| X | WO 2021/210268 A1 (SONY SEMICONDUCTOR SOLUTIONS CORP [JP]) 21 October 2021 (2021-10-21) * paragraphs [0007], [0033], [0035], [0044]; figure 3 * | 1 | TECHNICAL FIELDS SEARCHED (IPC) G01S |
| A | CN 115 035 470 A (CHINA NANHU ACAD OF ELECTRONICS AND INFORMATION) 9 September 2022 (2022-09-09) * page 2 paragraph 6, page 3 paragraph 4, page 7 paragraph 6, page 6 paragraph 3, page 7 paragraph 3-6, page 8 paragraph 4 * | 5,6,8 | |

The present search report has been drawn up for all claims

| Place of search | Date of completion of the search | Examiner |
|---|---|---|
| Munich | 29 March 2023 | Auinger, Florian |

EPO FORM 1503 03.82 (P04C01)

## ANNEX TO THE EUROPEAN SEARCH REPORT
## ON EUROPEAN PATENT APPLICATION NO.

EP 22 21 4033

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2023

| Patent document cited in search report | | Publication date | Patent family member(s) | | Publication date |
|---|---|---|---|---|---|
| WO 2019153016 | A1 | 08-08-2019 | EP | 3749977 A1 | 16-12-2020 |
| | | | JP | 2021516763 A | 08-07-2021 |
| | | | KR | 20200108097 A | 16-09-2020 |
| | | | WO | 2019153016 A1 | 08-08-2019 |
| US 2016003938 | A1 | 07-01-2016 | CN | 105242266 A | 13-01-2016 |
| | | | DE | 102015110446 A1 | 07-01-2016 |
| | | | US | 2016003938 A1 | 07-01-2016 |
| US 2022308204 | A1 | 29-09-2022 | CA | 3145740 A1 | 07-01-2021 |
| | | | CN | 114072696 A | 18-02-2022 |
| | | | EP | 3994492 A1 | 11-05-2022 |
| | | | JP | 2022538564 A | 05-09-2022 |
| | | | KR | 20220025755 A | 03-03-2022 |
| | | | US | 2022308204 A1 | 29-09-2022 |
| | | | WO | 2021003440 A1 | 07-01-2021 |
| WO 2021210268 | A1 | 21-10-2021 | NONE | | |
| CN 115035470 | A | 09-09-2022 | NONE | | |

EPO FORM P0459

For more details about this annex : see Official Journal of the European Patent Office, No. 12/82